# EUROPÄISCHE PATENTSCHRIFT

(11) **EP 3 533 215 B1**
(45) Veröffentlichungstag und Bekanntmachung des Hinweises auf die Patenterteilung: **12.02.2020**
(21) Anmeldenummer: 17832735.9
(22) Anmeldetag: 04.12.2017
(51) Int. Cl.: H04N 1/00, G09B 5/04, G09B 21/00, H04N 1/04

(54) **LESEGERÄT**
DEVICE FOR ENTERING AND OUTPUTTING TEXT AND/OR IMAGES
DISPOSITIF DE LECTURE ET DE SORTIE DE TEXTES ET/OU D'IMAGES

(30) Priorität: 08.12.2016 DE 102016224444
(43) Veröffentlichungstag der Anmeldung: 04.09.2019
(73) Patentinhaber: Baum, Wolfgang, 74909 Meckesheim (DE)
(72) Erfinder: Baum, Wolfgang, 74909 Meckesheim (DE)
(74) Vertreter: Patent- und Rechtsanwälte Ullrich & Naumann
(86) Internationale Anmeldenummer: PCT/DE2017/200124
(87) Internationale Veröffentlichungsnummer: WO 2018/103797

(56) Entgegenhaltungen:
- DE-A1-102012 221 810
- US-A1- 2006 203 093
- US-A1- 2010 067 068

## Beschreibung

Die Erfindung betrifft ein Lesegerät, insbesondere für Sehbehinderte, mit einer flächigen und transparenten Auflage für ein Lesegut und einer Bildaufnahmeeinrichtung zur Erfassung eines Texts und/oder eines Bilds zumindest eines Teils des Leseguts durch die Auflage hindurch.

Lesegeräte der eingangs genannten Art sind aus der Praxis bekannt und existieren in unterschiedlichen Ausführungsformen. Beispielsweise sind Lesegeräte bekannt, bei denen die Bildaufnahmeeinrichtung einen Scanner aufweist und die Auflage durch eine Glasplatte gebildet wird.

Des Weiteren sind Lesegeräte bekannt, bei denen die Bildaufnahmeeinrichtung eine Kamera aufweist, die auf der Auflage positioniertes Lesegut erfasst.

Des Weiteren ist aus der DE 10 2012 221 810 A1 ein Lesegerät bekannt, bei dem die transparente Auflage durch eine zu einem Grundelement geneigte Glasplatte realisiert ist. Ein Lesegut, beispielsweise ein Buch, kann bei dem bekannten Lesegerät derart auf die Auflage positioniert werden, dass eine einwandfreie Bilderfassung eines Texts auch in Randbereichen und Falzbereichen eines Buchs oder einer Zeitschrift möglich ist. Eine Bildaufnahme erfolgt bei dem bekannten Lesegerät durch eine in dem Grundelement angeordnete Kamera durch die Auflage hindurch. Das Grundelement weist eine Standfläche zum sicheren Positionieren des Lesegeräts auf einem Untergrund, beispielsweise einem Tisch, auf.

Bei dem bekannten Lesegerät ist problematisch, dass es letztendlich im Sinne eines Standgeräts für einen fest definierten Stand- und Betriebsort ausgebildet ist. Ein Wechsel des Einsatzorts bedarf eines nicht unbeträchtlichen Transport- und gegebenenfalls Verpackungsaufwands. Des Weiteren nimmt das bekannte Lesegerät bei Nichtbenutzung ein ganz erhebliches Raumvolumen ein, wobei dies insbesondere in einem Wohnbereich störend ist.

Der vorliegenden Erfindung liegt daher die Aufgabe zugrunde, ein Lesegerät der eingangs genannten Art derart auszugestalten und weiterzubilden, dass ein besonders einfacher Transport und ein einfaches Verstauen des Lesegeräts bei Nichtgebrauch des Lesegeräts mit konstruktiv einfachen Mitteln ermöglicht sind.

Erfindungsgemäß wird die voranstehende Aufgabe durch ein Lesegerät mit den Merkmalen des Anspruchs 1 gelöst. Danach ist das Lesegerät derart ausgestaltet und weitergebildet, dass der Auflage ein relativ zur Auflage um eine Schwenkachse verschwenkbares Stützelement zugeordnet ist, wobei das Stützelement zum Positionieren der Auflage in eine in einem definierbaren Winkel zu einer vertikalen Richtung geneigte Betriebsstellung und in eine Transport- oder Ruhestellung mit im Wesentlichen aneinander liegenden Auflage und Stützelement verschwenkbar ist.

In erfindungsgemäßer Weise ist zunächst erkannt worden, dass durch geschickte Anordnung der Auflage die voranstehende Aufgabe auf überraschend einfache Weise gelöst wird. In weiter erfindungsgemäßer Weise ist dann erkannt worden, dass durch die Realisierung eines relativ zur Auflage um eine Schwenkachse verschwenkbaren Stützelements eine Konstruktion bereitgestellt werden kann, die einen besonders einfachen Transport und ein einfaches Verstauen des Lesegeräts bei Nichtgebrauch des Lesegeräts gewährleistet. Dabei ist das Stützelement zum Positionieren der Auflage in eine in einem definierbaren Winkel zu einer vertikalen Richtung geneigte Betriebsstellung und - alternativ hierzu - in eine zu der Betriebsstellung unterschiedliche Transport- oder Ruhestellung verschwenkbar, in der die Auflage und das Stützelement im Wesentlichen aneinander oder aufeinander liegen. Dabei können die Auflage und das Stützelement in der Transport- oder Ruhestellung zumindest bereichsweise direkt aneinander liegen oder mit einem dazwischenliegenden weiteren Bauelement angeordnet werden. Das Verschwenken des Stützelements relativ zu der Auflage führt in der Betriebsstellung zu einer Anordnung, in der das Stützelement die Auflage in der geneigten Betriebsstellung abstützt. Die geneigte Betriebsstellung bietet dabei den Vorteil, dass beispielsweise ein Buch oder eine Zeitschrift so auf die Auflage aufgelegt werden kann, dass eine Buch- oder Zeitschriftenseite auch im Falzbereich flächig an der Auflage zu liegen kommt. Diese im Wesentlichen vollflächige Anlage des Leseguts an der Auflage gewährleistet eine sichere und vollständige Erfassung eines Texts und/oder eines Bilds des Leseguts durch die Bildaufnahmeeinrichtung mittels beispielsweise einer Kamera. Zum Erreichen der Transport- oder Ruhestellung wird das Stützelement dann einfach aus seiner die Auflage stützenden Schwenkposition derart verschwenkt, dass die Auflage und das Stützelement im Wesentlichen aneinander liegen. Hierdurch ist eine zusammengeklappte Anordnung der Auflage und des Stützelements realisiert. Diese Anordnung gewährleistet einen einfachen Transport und ein einfaches Verstauen des Lesegeräts bei Nichtgebrauch. In einem einfachen Fall kann diese Anordnung beispielsweise in eine Tasche gesteckt und an einen beliebigen weiteren Einsatzort transportiert werden oder beispielsweise in einem Regal oder in einer Schublade verstaut werden.

Das erfindungsgemäße Lesegerät ermöglicht somit einen besonders einfachen Transport und ein einfaches Verstauen des Lesegeräts bei Nichtgebrauch des Lesegeräts mit konstruktiv einfachen Mitteln.

Im Hinblick auf eine konstruktiv besonders einfache Ausgestaltung kann die Schwenkachse in oder an der Auflage realisiert sein, vorzugsweise in oder an einem Randbereich der Auflage. Bei dieser Ausführungsform sind das Stützelement und die Auflage schwenkbar aneinander gelagert. In der Betriebsstellung sind die Auflage und das Stützelement in einem Winkel zueinander verschwenkt, der ein Aufstellen der Auflage auf einem Untergrund ermöglicht, wobei die Auflage hierdurch in eine zu einer vertikalen Richtung geneigte Betriebsstellung positionierbar ist. Die Transport- oder Ruhestellung wird durch ein Verschwenken der Auflage und des Stützelements relativ zueinander erreicht, wobei das Verschwenken soweit erfolgt, bis die Auflage und das Stützelement im Wesentlichen aneinander oder aufeinander liegen.

Zur Realisierung einer besonders stabilen Ausführung des erfindungsgemäßen Lesegeräts kann das Stützelement oder die Auflage an einem Grundelement schwenkbar angelenkt sein. Durch ein derartiges zusätzliches Bauteil in Form des Grundelements - zu dem Stützelement und der Auflage - ist eine Erhöhung der Stabilität des Lesegeräts sowohl in der Betriebsstellung als auch in der Transport- oder Ruhestellung gewährleistet. Das Grundelement kann dabei als Standbasis für das Stützelement und die Auflage dienen. In der Transport- oder Ruhestellung ist ein Zusammenklappen des Lesegeräts dahingehend möglich, dass das Stützelement, die Auflage und das Grundelement in geeigneter Reihenfolge aneinander liegen können, um eine kompakte und flache Anordnung bereitzustellen, die einfach zu transportieren oder zu verstauen ist. Bei dieser Ausführung bildet das an dem Grundelement schwenkbar angelenkte Stützelement oder die am Grundelement schwenkbar angelenkte Auflage ein zwischen dem Grundelement und der Auflage beziehungsweise zwischen dem Grundelement und dem Stützelement angeordnetes Zwischenbauteil.

Bei einer alternativen vorteilhaften Ausgestaltung kann die Schwenkachse in oder an einem Grundelement realisiert sein. Hierbei kann das Stützelement in geeigneter Weise relativ zum Grundelement verschwenkt werden, um die Auflage in der Betriebsstellung in geeigneter Weise abzustützen. Das Grundelement kann hierbei wiederum als Standauflage des Lesegeräts auf einem Untergrund dienen.

Die Auflage kann als separates Bauteil realisiert sein, das in geeigneter Weise auf dem Grundelement - vorzugsweise in einer Nut oder an einem Vorsprung - aufsteht und in einer geneigten Stellung durch das Stützelement abgestützt wird. In besonders vorteilhafter Weise und zur Realisierung einer in einer Baugruppe gekoppelten Anordnung kann auch die Auflage an dem Grundelement schwenkbar gelagert sein. Zur Bildung der Betriebsstellung können sowohl das Stützelement als auch die Auflage aus einer im Wesentlichen aneinander oder aufeinander liegenden Position relativ zum Grundelement verschwenkt werden, um die durch das Stützelement abgestützte Betriebsstellung der Auflage zu erreichen. Zur Realisierung der Transport- oder Ruhestellung können wiederum sowohl die Auflage als auch das Stützelement zum Grundelement hin verschwenkt werden, so dass eine aneinander oder aufeinander liegende Anordnung aus Grundelement, Stützelement und Auflage gebildet wird.

Im Hinblick auf eine besonders sichere Positionierung der Auflage in der Betriebsstellung kann die Auflage einen Anlagebereich für das Stützelement aufweisen, wobei der Anlagebereich in besonders vorteilhafter Weise eine Nut oder einen Vorsprung aufweisen kann, mit dem das Stützelement in der Betriebsstellung in Eingriff gelangen kann.

Zur Gewährleistung einer besonders sicheren Bilderfassung kann der Auflage eine vorzugsweise flächige Abdeckung zugeordnet sein. Eine derartige Abdeckung kann auf ein auf der Auflage positioniertes Lesegut aufgelegt werden, um einerseits das Lesegut sicher auf die Auflage zu positionieren und um andererseits ein Durchscheinen von Licht bei einem nicht lichtdichten Lesegut zu verhindern oder zumindest weitestgehend zu reduzieren.

In weiter vorteilhafter Weise kann die Abdeckung relativ zu der Auflage verschwenkbar sein. Dabei kann die Abdeckung an einem Grundelement des Lesegeräts verschwenkbar sein, so dass die Abdeckung in der Transport- oder Ruhestellung ebenfalls an die Auflage, das Stützelement oder das Grundelement anlegbar ist. Im Ergebnis kann hierdurch auch bei der zusätzlichen Realisierung einer Abdeckung eine kompakte, zusammengeklappte oder zusammengefaltete Anordnung des Lesegeräts realisiert werden.

Bei einer konkreten Ausführungsform kann das Lesegerät eine Verarbeitungseinrichtung zum Verarbeiten des mittels der Bildaufnahmeeinrichtung erfassten Texts und/oder Bilds aufweisen. Eine derartige Verarbeitungseinrichtung kann beispielsweise durch eine dem Stützelement oder dem Grundelement zugeordnete oder in das Stützelement oder in das Grundelement integrierte Recheneinheit gebildet sein.

Bei einer weiteren Ausführungsform kann das Lesegerät eine Anzeigeeinrichtung zur Anzeige des mittels der Verarbeitungseinrichtung verarbeiteten Texts und/oder Bilds aufweisen. Eine derartige Anzeigeeinrichtung kann in vorteilhafter Weise als gemeinsames Bauteil mit einer Abdeckung realisiert sein. Hierdurch ist ein besonders kompakter Aufbau des Lesegeräts realisiert. Eine Anzeigeeinrichtung kann beispielsweise durch einen Bildschirm realisiert sein.

Alternativ oder zusätzlich zu einer derartigen Anzeigeeinrichtung kann das Lesegerät eine Sprachausgabeeinrichtung zur Audioausgabe des mittels der Verarbeitungseinrichtung verarbeiteten Texts und/oder Bilds und/oder eine Braillezeile zur Ausgabe des mittels der Verarbeitungseinrichtung verarbeiteten Texts und/oder Bilds in Brailleschrift aufweisen. Eine derartige Sprachausgabeeinrichtung kann der Verarbeitungseinrichtung zugeordnet oder in die Verarbeitungseinrichtung integriert sein und beispielsweise einen Lautsprecher oder eine Schnittstelle zum Anschließen eines Lautsprechers, beispielsweise Kopfhörers, aufweisen. Durch die Zuordnung einer Sprachausgabeeinrichtung zu dem Lesegerät oder Integration einer Sprachausgabeeinrichtung in das Lesegerät kann ein Vorlesegerät bereitgestellt werden.

Bei einem weiteren Ausführungsbeispiel des erfindungsgemäßen Lesegeräts kann die Bildaufnahmeeinrichtung eine Schnittstelle zum Anschließen einer Verarbeitungseinrichtung zum Verarbeiten des mittels der Bildaufnahmeeinrichtung erfassten Texts und/oder Bilds aufweisen. Eine derartige Schnittstelle kann eine Verbindung zu einem Rechner, beispielsweise PC oder Laptop, herstellen. Die Verarbeitungseinrichtung wird dabei durch den Rechner realisiert, wobei eine Stromversorgung der Bildaufnahmeeinrichtung, beispielsweise Kamera, über die Schnittstelle erfolgen kann. Mit einem derartigen Lesegerät ist eine mobile Bildaufnahmeeinheit mit einer Buchkante oder Zeitschriftenkante bereitgestellt, die sowohl für Blinde und Sehbehinderte, als auch im verbleibenden Markt für jeden Nutzer eines Rechners geeignet ist.

Alternativ oder zusätzlich kann die Schnittstelle zum Anschließen einer Anzeigeeinrichtung zur Anzeige des mittels der oder einer Verarbeitungseinrichtung verarbeiteten Texts und/oder Bilds und/oder zum Anschließen einer Sprachausgabeeinrichtung zur Audioausgabe des mittels der oder einer Verarbeitungseinrichtung verarbeiteten Texts und/oder Bilds und/oder zum Anschließen einer Braillezeile zur Ausgabe des mittels der oder einer Verarbeitungseinrichtung verarbeiteten Texts und/oder Bilds in Brailleschrift ausgebildet sein. In jedem Fall kann durch ein derart ausgebildetes Lesegerät eine besonders mobile Bildaufnahmeeinheit zum Anschluss unterschiedlicher Funktionseinheiten bereitgestellt werden.

Je nach individuellem Erfordernis kann die Bildaufnahmeeinrichtung dem Stützelement, dem Grundelement oder der Verarbeitungseinrichtung zugeordnet oder mit dem Stützelement, dem Grundelement oder der Verarbeitungseinrichtung vorzugsweise integral gekoppelt sein. Bei der Anordnung oder Zuordnung der Bildaufnahmeeinrichtung ist wesentlich, dass diese in der Betriebsstellung eine sichere Erfassung eines Texts und/oder eines Bilds zumindest eines Teils des Leseguts durch die Auflage hindurch ermöglicht. Zwischen der Bildaufnahmeeinrichtung in Form beispielsweise einer Kamera und der Auflage sollten daher keine weiteren Funktionselemente angeordnet sein. Eine "freie Sicht" der Kamera auf die Auflage ist wünschenswert. Im Konkreten kann die Bildaufnahmeeinrichtung beispielsweise dem Stützelement derart zugeordnet sein oder derart mit dem Stützelement gekoppelt sein, dass die Bildaufnahmeeinrichtung mit dem Stützelement mitschwenkt, wenn das Stützelement relativ zur Auflage verschwenkt wird. Die Bildaufnahmeeinrichtung könnte in weiter vorteilhafter Weise und zur Realisierung einer besonders kompakten Ausgestaltung des Lesegeräts in die Schwenkachse des Stützelements integriert sein.

In der Betriebsstellung des Lesegeräts, in der die Auflage und das Stützelement in geeigneter Weise zueinander verschwenkt und geneigt sind, kann ein seitlicher Fremdlichteinfall auf die Bildaufnahmeeinrichtung erfolgen, der eine sichere Erfassung eines Texts und/oder eines Bilds des Leseguts beeinträchtigt. Zur Verhinderung oder Reduzierung eines derartigen Fremdlichteinfalls kann das Lesegerät mindestens ein Schutzelement, vorzugsweise eine Klappe, aufweisen, die dreieckig ausgebildet sein kann und/oder aus oder von dem Grundelement oder Stützelement ausklappbar sein kann. Hierdurch können die seitlichen Bereiche oder Seitenöffnungen der Anordnung aus Auflage und Stützelement in der Betriebsstellung zumindest bereichsweise geschlossen werden, so dass ein seitlicher Fremdlichteinfall verhindert oder zumindest reduziert werden kann.

Bei einer konkreten Ausführungsform kann das mindestens eine Schutzelement dem Grundelement oder dem Stützelement zugeordnet sein, wobei vorzugsweise das mindestens eine Schutzelement schwenkbar an dem Grundelement oder Stützelement gelagert sein kann. In weiter vorteilhafter Weise sind zwei Schutzelemente vorgesehen, die auf beiden Seiten der Anordnung aus Auflage und Stützelement in der Betriebsstellung angeordnet sein können.

Ein wie oben beschriebenes Grundelement kann im Konkreten in Form einer Bodenwanne ausgebildet sein, in die das Stützelement und die Auflage in der Transport- oder Ruhestellung eingeschwenkt sein können. An beispielsweise dem Grundelement oder der Bodenwanne schwenkbar gelagerte Schutzelemente können aus einer derartigen Bodenwanne herausgeklappt werden und zum Erzeugen eines im Wesentlichen geschlossenen Körpers aus Schutzelementen, Auflage, Stützelement und gegebenenfalls Grundelement dienen. Hierbei ist eine besonders sichere Erfassung eines Texts und/oder eines Bilds mittels der Bildaufnahmeeinrichtung gewährleistet.

Das erfindungsgemäße Lesegerät bietet zahlreiche Vorteile. Eine kamerabasierte Bildaufnahmeeinrichtung gewährleitet eine sehr schnelle Erfassung eines Texts und/oder eines Bilds. Die Anordnung des Leseguts auf der vorzugsweise in Form einer Glasplatte realisierten Auflage ermöglicht eine wohldefinierte Umgebung für die Bildaufnahme. Der Auflage kann in weiter vorteilhafter Weise eine Beleuchtungseinrichtung zum Beleuchten des Leseguts zugeordnet sein. Eine flache Ausbildung der Auflage gewährleistet eine sichere Positionierung des zu erfassenden Leseguts. Die durch das geneigte Positionieren der Auflage erzeugte obere Kante dient in besonders vorteilhafter Weise zum Erkennen und Lesen des Leseguts bis in beispielsweise einen Falz von Büchern oder Zeitschriften. Durch die Zusammenklappbarkeit des Lesegeräts aufgrund der Verschwenkbarkeit der Auflage und des Stützelements relativ zueinander kann das Lesegerät in eine sehr kleine und portable Anordnung verbracht werden. Das Lesegerät, insbesondere die Bildaufnahmeeinrichtung und/oder eine Verarbeitungseinrichtung und/oder eine Anzeigeeinrichtung und/oder eine Sprachausgabeeinrichtung, kann mittels eines Akkumulators - netzunabhängig - betrieben werden. Ein derartiger Akkumulator kann beispielsweise in die Bildaufnahmeeinrichtung oder in die Verarbeitungseinrichtung integriert werden. Eine dem Lesegerät geeignet zugeordnete oder in das Lesegerät integrierte Verarbeitungseinrichtung gewährleistet eine integrierte Zeichenerkennung und vorzugsweise Sprachausgabe. Eine Anzeigeeinrichtung in Form beispielsweise eines Bildschirms kann optional dem Lesegerät zugeordnet oder in das Lesegerät integriert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen und perspektivischen Darstellung ein erstes Ausführungsbeispiel des erfindungsgemäßen Lesegeräts,
- Fig. 2: in einer schematischen und perspektivischen Darstellung das Lesegerät aus Fig. 1 im zusammengeklappten Zustand,
- Fig. 3: in einer schematischen und perspektivischen Darstellung ein zweites Ausführungsbeispiel des erfindungsgemäßen Lesegeräts in einer Betriebsstellung und in einer zusammengeklappten Transport- oder Ruhestellung,
- Fig. 4: in einer schematischen und perspektivischen Darstellung ein drittes Ausführungsbeispiel des erfindungsgemäßen Lesegeräts in einer Betriebsstellung und in einer zusammengeklappten Transport- oder Ruhestellung,
- Fig. 5: in einer schematischen und perspektivischen Darstellung ein viertes Ausführungsbeispiel des erfindungsgemäßen Lesegeräts in einer Betriebsstellung,
- Fig. 6: in einer schematischen und perspektivischen Darstellung ein fünftes Ausführungsbeispiel des erfindungsgemäßen Lesegeräts in einer Betriebsstellung und
- Fig. 7: in einer schematischen und perspektivischen Darstellung das Lesegerät aus Fig. 6 in einer zusammengeklappten Transport- oder Ruhestellung.

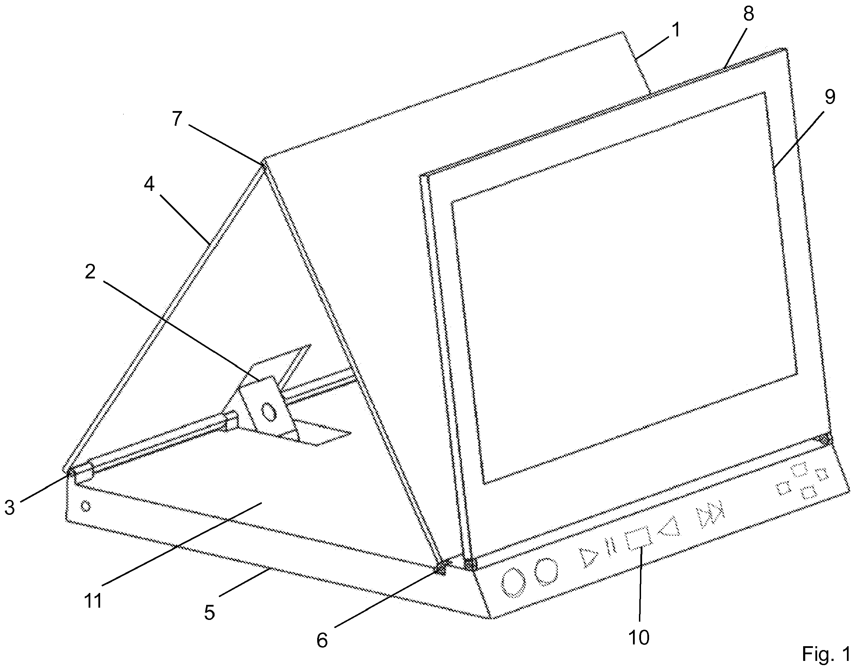

Fig. 1 zeigt in einer schematischen und perspektivischen Darstellung ein erstes Ausführungsbeispiel des erfindungsgemäßen Lesegeräts mit einer flächigen und transparenten Auflage 1 in Form einer Glasplatte für ein Lesegut und einer Bildaufnahmeeinrichtung 2 in Form einer Kamera zur Erfassung eines Texts und/oder eines Bilds zumindest eines Teils des Leseguts durch die Auflage 1 hindurch. Im Hinblick auf einen besonders einfachen Transport und ein einfaches Verstauen des Lesegeräts bei Nichtgebrauch des Lesegeräts ist der Auflage 1 ein relativ zur Auflage 1 um eine Schwenkachse 3 verschwenkbares Stützelement 4 zugeordnet. Im Konkreten ist das Stützelement 4 über die Schwenkachse 3 an einem Grundelement 5 schwenkbar gelagert, das als Aufstellbasis oder Standhilfe zur Positionierung auf einem Untergrund dient. Die Auflage 1 ist über eine Schwenkachse 6 ebenfalls am Grundelement 5 schwenkbar gelagert, so dass die Auflage 1 und das Stützelement 4 unabhängig voneinander relativ zum Grundelement und relativ zueinander verschwenkbar sind.

Das Stützelement 4 ist zum Positionieren der Auflage 1 in eine in einem definierbaren Winkel zu einer vertikalen Richtung geneigte Betriebsstellung verschwenkbar, die in Fig. 1 gezeigt ist. Die vertikale Richtung entspricht der Lotrichtung und verläuft senkrecht zur Erdoberfläche. Sowohl die Schwenkachse 3 als auch die Schwenkachse 6 sind an dem Grundelement 5 realisiert. Die Auflage 1 weist einen Anlagebereich in Form einer Nut 7 für das Stützelement 4 auf, so dass das Stützelement 4 in der Betriebsstellung mit seinem oberen Rand in der Nut 7 angeordnet ist.

Die Bildaufnahmeeinrichtung 2 ist mit dem Stützelement 4 gekoppelt, so dass ein Verschwenken des Stützelements 4 auch ein Verschwenken der Bildaufnahmeeinrichtung 2 zur Folge hat. In der in Fig. 1 gezeigten Betriebsstellung zeigt die Bildaufnahmeeinrichtung 2 mit ihrer Kamera auf die Auflage 1, auf der ein zu erfassendes Lesegut positioniert werden kann. Die prismenartige Form des Lesegeräts in seiner Betriebsstellung gewährleistet eine flächige Auflage des Leseguts, beispielsweise ein Buch oder eine Zeitschrift, auf der Auflage 1 bis in einen Rand- oder Falzbereich des Leseguts, so dass eine sichere Erfassung des vollständigen Texts und/oder Bilds des Leseguts ermöglicht ist.

Der Auflage 1 ist eine flächige Abdeckung 8 zugeordnet, die ebenfalls schwenkbar an dem Grundelement 5 gelagert ist. Die Abdeckung kann zum Andrücken oder Anlegen des Leseguts an die Auflage 1 verwendet werden. Des Weiteren ist in die Abdeckung 8 eine Anzeigeeinrichtung 9 in Form eines Bildschirms zur Anzeige des erfassten Texts und/oder Bilds integriert. Anstelle der Abdeckung 8 kann auch ausschließlich eine Anzeigeeinrichtung 9 vorgesehen sein, die an dem Grundelement 5 gelagert sein kann.

An der Vorderseite des Grundelements 5 sind Bedienelemente 10 für das Lesegerät realisiert.

Das Lesegerät weist des Weiteren eine Verarbeitungseinrichtung 11 zum Verarbeiten des mittels der Bildaufnahmeeinrichtung 2 erfassten Texts und/oder Bilds auf. Bei dem hier gezeigten Ausführungsbeispiel ist die Verarbeitungseinrichtung 11 in das Grundelement 5 integriert.

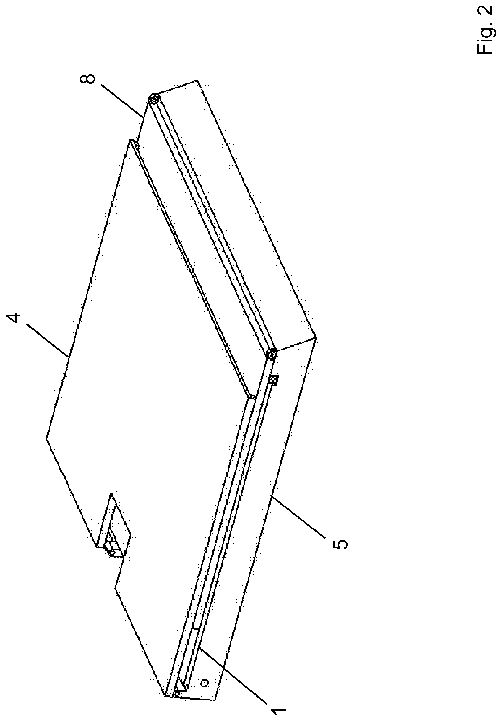

Fig. 2 zeigt das Ausführungseispiel aus Fig. 1 in einer zusammengeklappten Transport- oder Ruhestellung, wobei die Auflage 1 und das Stützelement 4 im Wesentlichen - mit dazwischenliegender Abdeckung 8 - aneinander oder aufeinander liegen. Je nach Ausgestaltung können die Auflage 1 und das Stützelement 4 in der Transport- oder Ruhestellung direkt und unmittelbar oder mit einem dazwischenliegenden Element aneinander liegen. In dieser Transport- oder Ruhestellung ist eine handliche Anordnung realisiert, die auf einfache Weise, beispielsweise in eine Tasche gesteckt oder nur mit einer Hand gegriffen, transportiert werden kann.

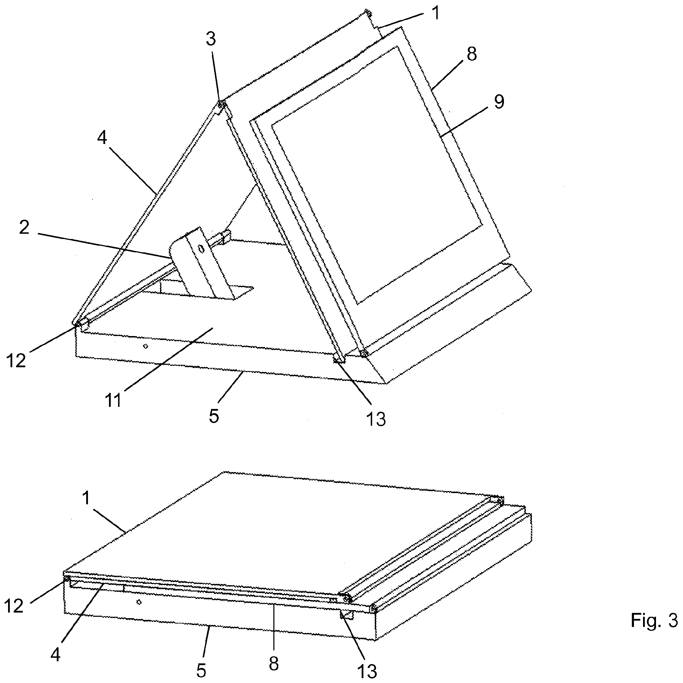

Fig. 3 zeigt in zwei schematischen und perspektivischen Darstellungen ein zweites Ausführungsbeispiel des erfindungsgemäßen Lesegeräts in einer Betriebsstellung und in einer Transport- oder Ruhestellung. Bei diesem Ausführungsbeispiel ist die Auflage 1 relativ zum Stützelement 4 über eine Schwenkachse 3 verschwenkbar, die in einem Randbereich der Auflage 1 realisiert ist. Die Auflage 1 und das Stützelement 4 sind bei dieser Ausgestaltung über die Schwenkachse 3 direkt miteinander gekoppelt. Das Stützelement 4 ist an der der Auflage 1 abgewandten Seite an dem Grundelement 5 über eine weitere Schwenkachse 12 schwenkbar gelagert.

In der Betriebsstellung ist die Auflage 1 in einer in dem Grundelement 5 ausgebildeten Nut 13 abgestützt. Die Verarbeitungseinrichtung 11 ist bei diesem Ausführungsbeispiel ebenfalls in dem Grundelement 5 angeordnet. In der in Fig. 3 unten dargestellten Transport- oder Ruhestellung ist zunächst die Abdeckung 8 auf das Grundelement 5 aufgelegt und sind darauf das Stützelement 4 und die Auflage 1 - vom Grundelement 5 weg geschwenkt - in zusammengeklapptem Zustand auf die Abdeckung 8 gelegt.

Bei einem hier nicht gezeigten Ausführungsbeispiel kann anstelle des Stützelements 4 die Auflage 1 an dem Grundelement 5 schwenkbar gelagert sein, wobei in diesem Fall das Stützelement 4 in einer in dem Grundelement 5 ausgebildeten Nut abgestützt werden kann, um die prismenartige Betriebsstellung bereitzustellen.

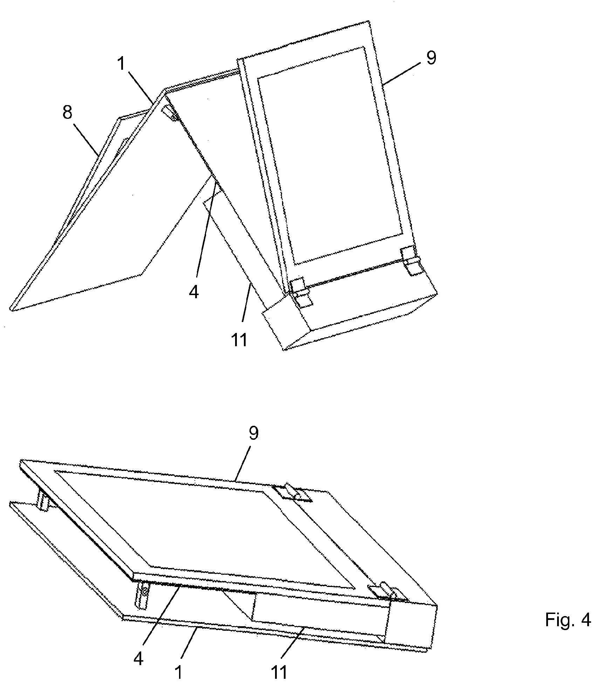

Fig. 4 zeigt ein drittes Ausführungsbeispiel des erfindungsgemäßen Lesegeräts in zwei schematischen und perspektivischen Darstellungen. Bei diesem Ausführungsbeispiel ist kein Grundelement vorgesehen und sind die Auflage 1 und das Stützelement 4 direkt aneinander schwenkbar gelagert. Der Auflage 1 ist eine zur Auflage 1 verschwenkbare Abdeckung 8 zugeordnet. Des Weiteren ist eine Anzeigeeinrichtung 9 schwenkbar an dem Stützelement 4 gelagert. Dem Stützelement 4 ist des Weiteren eine Verarbeitungseinrichtung 11 zum Verarbeiten des mittels der Bildaufnahmeeinrichtung 2 erfassten Texts und/oder Bilds zugeordnet. Die Bildaufnahmeeinrichtung 2 ist in Fig. 4 nicht gezeigt und ist im Wesentlichen der Verarbeitungseinrichtung 11 zugeordnet oder in diese integriert. Im unteren Bereich der Fig. 4 ist das dritte Ausführungsbeispiel in einer Transport- oder Ruhestellung gezeigt.

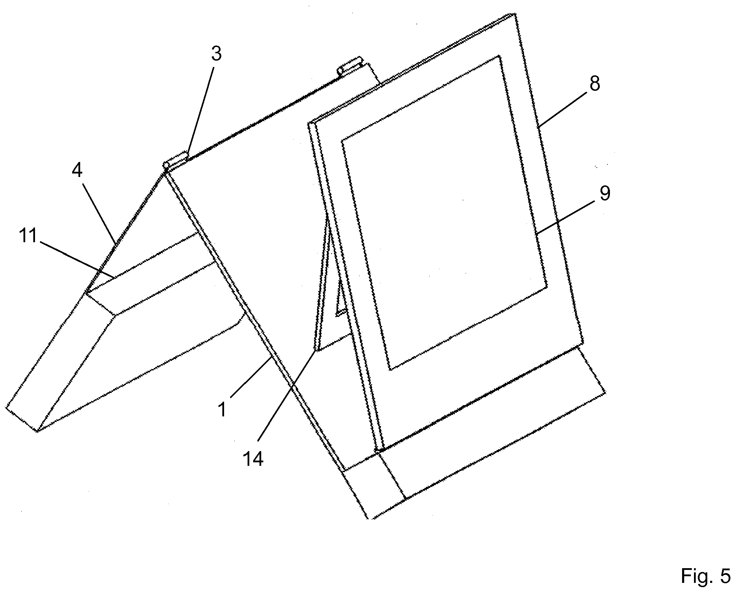

Fig. 5 zeigt in einer schematischen und perspektivischen Darstellung ein viertes Ausführungsbeispiel des erfindungsgemäßen Lesegeräts in seiner Betriebsstellung. Wie das in Fig. 4 gezeigte dritte Ausführungsbeispiel weist auch das in Fig. 5 gezeigte vierte Ausführungsbeispiel kein Grundelement auf. Die Auflage 1 ist über eine Schwenkachse 3 relativ zum Stützelement 4 gelagert. Dem Stützelement 4 ist eine Verarbeitungseinrichtung 11 mit hier nicht gezeigter integrierter Bildaufnahmeeinrichtung 2 zugeordnet. Eine Abdeckung 8 mit integrierter Anzeigeeinrichtung 9 ist schwenkbar zur Auflage 1 an der Auflage 1 gelagert. Der Abdeckung 8 oder der Anzeigeeinrichtung 9 ist eine Abstützung 14 zugeordnet, die an der Abdeckung 8 oder der Anzeigeeinrichtung 9 schwenkbar gelagert ist. Hierdurch kann die Neigestellung der Anzeigeeinrichtung 9 im Betrieb des Lesegeräts vorgegeben werden, wobei sich die Abstützung 14 an der Auflage 1 abstützen kann.

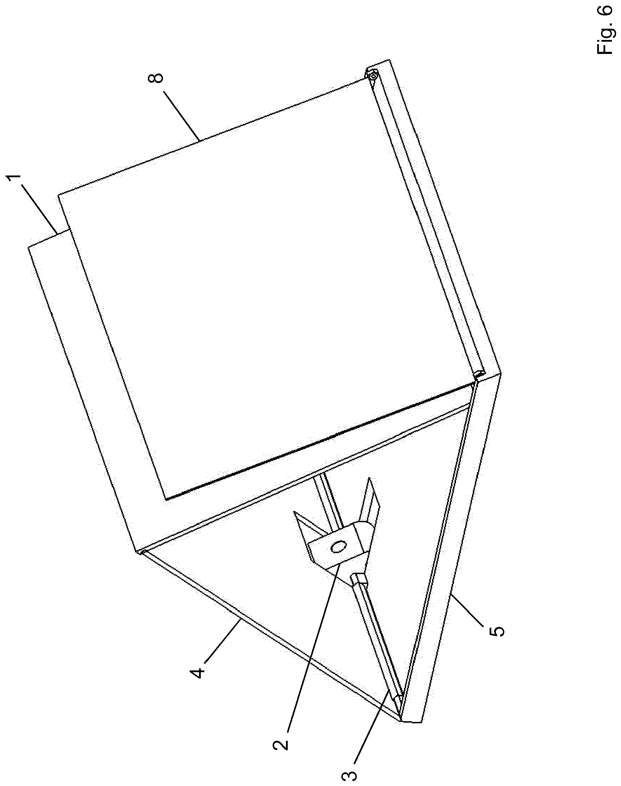

Fig. 6 zeigt ein fünftes Ausführungsbeispiel des erfindungsgemäßen Lesegeräts, wobei dieses Ausführungsbeispiel eine Auflage 1, ein Stützelement 4 und ein als Bodenwanne ausgebildetes Grundelement 5 aufweist. Sowohl die Auflage 1 als auch das Stützelement 4 sind schwenkbar an dem Grundelement 5 gelagert. Die Lagerung des Stützelements 4 an dem Grundelement 5 erfolgt über eine Schwenkachse 3 und die Lagerung der Auflage 1 an dem Grundelement 5 erfolgt über eine hier nicht gezeigte weitere Schwenkachse. Die Abdeckung 8 ist ebenfalls an dem Grundelement 5 schwenkbar gelagert. Bei einer alternativen, hier nicht gezeigten Ausführung könnte die Auflage 1 wie bei dem in Fig. 3 gezeigten zweiten Ausführungsbeispiel anstelle an dem Grundelement 5 an dem Stützelement 4 schwenkbar gelagert sein, wobei das Stützelement 4 weiterhin an dem Grundelement 5 schwenkbar gelagert ist. Bei einer weiter alternativen Ausführungsform könnte die Auflage 1 an dem Grundelement 5 und das Stützelement 4 an der Auflage 1 und nicht am Grundelement 5 schwenkbar gelagert sein.

Bei diesem in Fig. 6 gezeigten Ausführungsbeispiel und den im letzten Absatz genannten alternativen Ausführungsformen zu diesem Ausführungsbeispiel ist wesentlich, dass dieses Lesegerät keine Verarbeitungseinrichtung, sondern lediglich eine Schnittstellte zum Anschließen einer derartigen Verarbeitungseinrichtung und/oder einer Anzeigeeinrichtung und/oder einer Sprachausgabeeinrichtung aufweist. Das Lesegerät gemäß dem Ausführungsbeispiel in Fig. 6 und den zugehörigen im letzten Absatz genannten und nicht gezeigten alternativen Ausführungsformen besteht dabei im Wesentlichen nur aus der Auflage 1, dem Stützelement 4, dem Grundelement 5, der Bildaufnahmeeinrichtung 2 und einer geeigneten Schnittstelle, wobei auch das Grundelement 5 nicht zwingend erforderlich ist und im Rahmen eines weiteren Ausführungsbeispiels bei schwenkbarer Lagerung der Auflage 1 direkt am Stützelement 4 weggelassen werden kann. Über diese Schnittstelle kann die Bildaufnahmeeinrichtung 2 mit Strom versorgt werden. Eine Verarbeitungseinrichtung zum Verarbeiten des mittels der Bildaufnahmeeinrichtung 2 erfassten Texts und/oder Bilds kann über eine beispielsweise als USB-Anschluss ausgebildete Schnittstelle angeschlossen werden. Hierdurch ist eine mobile Bildaufnahmeeinheit bereitgestellt, die auf einfache Weise zu gewünschten Einsatzorten transportiert werden kann. Da dieses Ausführungsbeispiel keine Verarbeitungseinrichtung, Anzeigeeinrichtung oder Sprachausgabeeinrichtung aufweist, ist es besonders leicht und mobil. Es ist auch denkbar, dass der Bildaufnahmeeinrichtung 2 ein fest eingebauter oder herausnehmbarer Speicher zugeordnet ist, um erfassten Text und/oder ein erfasstes Bild eines Leseguts für beispielsweise eine spätere Verarbeitung zu speichern.

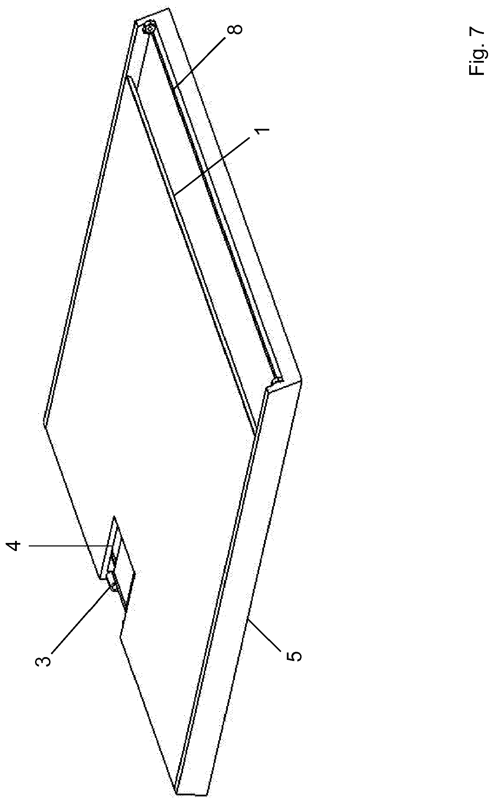

Fig. 7 zeigt in einer schematischen und perspektivischen Darstellung das Ausführungsbeispiel aus Fig. 6 in der Transport- oder Ruhestellung. In dieser Darstellung sind die Auflage 1, das Stützelement 4 und die Abdeckung 8 in geschützter Weise in das als Bodenwanne ausgebildete Grundelement 5 verschwenkt. Dabei liegt die Auflage 1 auf dem Stützelement 4 und das Stützelement 4 auf der Abdeckung 8.

Hinsichtlich weiterer vorteilhafter Ausgestaltungen des erfindungsgemäßen Lesegeräts wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Lesegeräts lediglich zur Erörterung der beanspruchten Lehre dienen, diese jedoch nicht auf die Ausführungsbeispiele einschränken.

### Bezugszeichenliste

- 1: Auflage
- 2: Bildaufnahmeeinrichtung
- 3: Schwenkachse
- 4: Stützelement
- 5: Grundelement
- 6: Schwenkachse
- 7: Nut
- 8: Abdeckung
- 9: Anzeigeeinrichtung
- 10: Bedienelement
- 11: Verarbeitungseinrichtung
- 12: Schwenkachse
- 13: Nut
- 14: Abstützung

## Patentansprüche

1. Lesegerät, insbesondere für Sehbehinderte, mit einer flächigen und transparenten Auflage (1) für ein Lesegut und einer Bildaufnahmeeinrichtung (2) zur Erfassung eines Texts und/oder eines Bilds zumindest eines Teils des Leseguts durch die Auflage (1) hindurch,
**dadurch gekennzeichnet, dass** der Auflage (1) ein relativ zur Auflage (1) um eine Schwenkachse (3) verschwenkbares Stützelement (4) zugeordnet ist, wobei das Stützelement (4) zum Positionieren der Auflage (1) in eine in einem definierbaren Winkel zu einer vertikalen Richtung geneigte Betriebsstellung und in eine Transport- oder Ruhestellung mit im Wesentlichen aneinander liegenden Auflage (1) und Stützelement (4) verschwenkbar ist.

2. Lesegerät nach Anspruch 1, **dadurch gekennzeichnet, dass** die Schwenkachse (3) in oder an der Auflage (1) realisiert ist, vorzugsweise in oder an einem Randbereich der Auflage (1).

3. Lesegerät nach Anspruch 1 oder 2, **dadurch gekennzeichnet, dass** das Stützelement (4) oder die Auflage (1) an einem Grundelement (5) schwenkbar angelenkt ist.

4. Lesegerät nach Anspruch 1, **dadurch gekennzeichnet, dass** die Schwenkachse (3) in oder an einem Grundelement (5) realisiert ist.

5. Lesegerät nach Anspruch 4, **dadurch gekennzeichnet, dass** die Auflage (1) an dem Grundelement (5) schwenkbar gelagert ist.

6. Lesegerät nach Anspruch 4 oder 5, **dadurch gekennzeichnet, dass** die Auflage (1) einen Anlagebereich für das Stützelement (4) aufweist, wobei vorzugsweise der Anlagebereich eine Nut (7) oder einen Vorsprung aufweist.

7. Lesegerät nach einem der Ansprüche 1 bis 6, **dadurch gekennzeichnet, dass** der Auflage (1) eine vorzugsweise flächige Abdeckung (8) zugeordnet ist.

8. Lesegerät nach Anspruch 7, **dadurch gekennzeichnet, dass** die Abdeckung (8) relativ zu der Auflage (1) verschwenkbar ist.

9. Lesegerät nach einem der Ansprüche 1 bis 8, **dadurch gekennzeichnet, dass** das Lesegerät eine Verarbeitungseinrichtung (11) zum Verarbeiten des mittels der Bildaufnahmeeinrichtung (2) erfassten Texts und/oder Bilds aufweist.

10. Lesegerät nach Anspruch 9, **dadurch gekennzeichnet, dass** das Lesegerät eine - vorzugsweise als gemeinsames Bauteil mit einer Abdeckung (8) realisierte - Anzeigeeinrichtung (9) zur Anzeige des mittels der Verarbeitungseinrichtung (11) verarbeiteten Texts und/oder Bilds aufweist.

11. Lesegerät nach Anspruch 9 oder 10, **dadurch gekennzeichnet, dass** das Lesegerät eine Sprachausgabeeinrichtung zur Audioausgabe des mittels der Verarbeitungseinrichtung (11) verarbeiteten Texts und/oder Bilds und/oder Braillezeile zur Ausgabe des mittels der Verarbeitungseinrichtung (11) verarbeiteten Texts und/oder Bilds in Brailleschrift aufweist.

12. Lesegerät nach einem der Ansprüche 1 bis 11, **dadurch gekennzeichnet, dass** die Bildaufnahmeeinrichtung (2) eine Schnittstelle zum Anschließen einer Verarbeitungseinrichtung (11) zum Verarbeiten des mittels der Bildaufnahmeeinrichtung (2) erfassten Texts und/oder Bilds und/oder einer Anzeigeeinrichtung (9) zur Anzeige des mittels der oder einer Verarbeitungseinrichtung (11) verarbeiteten Texts und/oder Bilds und/oder einer Sprachausgabeeinrichtung zur Audioausgabe des mittels der oder einer Verarbeitungseinrichtung (11) verarbeiteten Texts und/oder Bilds und/oder einer Braillezeile zur Ausgabe des mittels der oder einer Verarbeitungseinrichtung (11) verarbeiteten Texts und/oder Bilds in Brailleschrift aufweist.

13. Lesegerät nach einem der Ansprüche 1 bis 12, **dadurch gekennzeichnet, dass** die Bildaufnahmeeinrichtung (2) dem Stützelement (4), dem Grundelement (5) oder der Verarbeitungseinrichtung (11) zugeordnet oder mit dem Stützelement (4), dem Grundelement (5) oder der Verarbeitungseinrichtung (11) gekoppelt ist.

14. Lesegerät nach einem der Ansprüche 1 bis 13, **dadurch gekennzeichnet, dass** das Lesegerät mindestens ein Schutzelement, vorzugsweise eine Klappe, zur Verhinderung oder Reduzierung eines Fremdlichteinfalls aufweist.

15. Lesegerät nach Anspruch 14, **dadurch gekennzeichnet, dass** das mindestens eine Schutzelement dem Grundelement (5) oder dem Stützelement (4) zugeordnet ist, wobei vorzugsweise das mindestens eine Schutzelement schwenkbar an dem Grundelement (5) oder Stützelement (4) gelagert ist.

## Claims

1. Reading device, in particular for the visually impaired, having a planar and transparent support (1) for reading material and am image recording device (2) for detecting a text and/or an image of at least a portion of the reading material through the support (1),
**characterised in that** a support element (4) which can be pivoted relative to the support (1) about a pivot axis (3) is associated with the support (1), wherein the support element (4) can be pivoted in order to position the support (1) into an operating position which is inclined at a definable angle with respect to a vertical direction and into a transport or rest position with the support (1) and support element (4) substantially abutting each other.

2. Reading device according to claim 1, **characterised in that** the pivot axis (3) is produced in or on the support (1), preferably in or on an edge region of the support (1).

3. Reading device according to claim 1 or claim 2, **characterised in that** the support element (4) or the support (1) is pivotably articulated to a base element (5).

4. Reading device according to claim 1, **characterised in that** the pivot axis (3) is produced in or on a base element (5).

5. Reading device according to claim 4, **characterised in that** the support (1) is pivotably supported on the base element (5).

6. Reading device according to claim 4 or claim 5, **characterised in that** the support (1) has an abutment region for the support element (4), wherein the support region preferably has a groove (7) or a projection.

7. Reading device according to any one of claims 1 to 6, **characterised in that** a preferably planar cover (8) is associated with the support (1).

8. Reading device according to claim 7, **characterised in that** the cover (8) can be pivoted relative to the support (1).

9. Reading device according to any one of claims 1 to 8, **characterised in that** the reading device has a processing device (11) for processing the text and/or image detected by means of the image recording device (2).

10. Reading device according to claim 9, **characterised in that** the reading device has a display device (9) - which is preferably produced as a common component with a cover (8) - for displaying the text and/or image processed by means of the processing device (11).

11. Reading device according to claim 9 or claim 10, **characterised in that** the reading device has a speech output device for audio output of the text and/or image and/or refreshable Braille display processed by the processing device (11) in order to output the text and/or image processed by the processing device (11) in Braille script.

12. Reading device according to any one of claims 1 to 11, **characterised in that** the image recording device (2) has an interface for connecting a processing device (11) for processing the text and/or image detected by the image recording device (2) and/or a display device (9) for displaying the text and/or image processed by means of the or a processing device (11) and/or a speech output device for audio output of the text and/or image processed by the or a processing device (11) and/or a refreshable Braille display in order to output the text and/or image processed by the or a processing device (11) in Braille script.

13. Reading device according to any one of claims 1 to 12, **characterised in that** the image recording device (2) is associated with the support element (4), the base element (5) or the processing device (11) or is coupled to the support element (4), the base element (5) or the processing device (11) .

14. Reading device according to any one of claims 1 to 13, **characterised in that** the reading device has at least one protection element, preferably a flap, in order to prevent or reduce an incidence of extraneous light.

15. Reading device according to claim 14, **characterised in that** the at least one protection element is associated with the base element (5) or the support element (4), wherein the at least one protection element is preferably pivotably supported on the base element (5) or support element (4).

## Revendications

1. Appareil de lecture pour malvoyants, avec un support (1) plat et transparent pour un document et un dispositif de prise d'images (2) pour la détection d'un texte et/ou d'une image d'au moins une partie du document à travers le support (1),
**caractérisé en ce que**, au support (1) correspond un élément d'appui (1) pivotant par rapport au support (1) autour d'un axe de pivotement (3), l'élément d'appui (4) pouvant pivoter, pour le positionnement du support (1) vers une position de fonctionnement inclinée avec un angle déterminé par rapport à une direction verticale et vers une position de transport ou de repos, dans laquelle le support (1) et l'élément d'appui (4) sont globalement juxtaposés.

2. Appareil de lecture selon la revendication 1, **caractérisé en ce que** l'axe de pivotement (3) est réalisé dans ou sur le support (1), de préférence dans ou sur un bord du support (1).

3. Appareil de lecture selon la revendication 1 ou 2, **caractérisé en ce que** l'élément d'appui (4) ou le support (1) est articulé de manière pivotante au niveau d'un élément de base (5).

4. Appareil de lecture selon la revendication 1, **caractérisé en ce que** l'axe de pivotement (3) est réalisé dans ou sur un élément de base (5).

5. Appareil de lecture selon la revendication 4, **caractérisé en ce que** le support (1) est logé de manière pivotante au niveau de l'élément de base (5).

6. Appareil de lecture selon la revendication 4 ou 5, **caractérisé en ce que** le support (1) comprend une partie d'appui pour l'élément d'appui (4), de préférence la partie d'appui comprenant une rainure (7) ou une saillie.

7. Appareil de lecture selon l'une des revendications 1 à 6, **caractérisé en ce que**, au support (1), correspond un couvercle (8), de préférence plat.

8. Appareil de lecture selon la revendication 7, **caractérisé en ce que** le couvercle (8) peut pivoter par rapport au support (1).

9. Appareil de lecture selon l'une des revendications 1 à 8, **caractérisé en ce que** l'appareil de lecture comprend un dispositif de traitement (11) pour le traitement du texte et/ou de l'image détectée au moyen du dispositif de prise d'images (2).

10. Appareil de lecture selon la revendication 9, **caractérisé en ce que** l'appareil de lecture comprend un dispositif d'affichage (9) - réalisé de préférence sous la forme d'un composant commun avec un couvercle (8) - pour l'affichage du texte et/ou de l'image traitée au moyen du dispositif de traitement (11).

11. Appareil de lecture selon la revendication 9 ou 10, **caractérisé en ce que** l'appareil de lecture comprend un dispositif de sortie vocale pour la sortie audio du texte et/ou de l'image traitée au moyen du dispositif de traitement (11) et/ou un afficheur Braille pour l'affichage en écriture Braille du texte et/ou de l'image traitée au moyen du dispositif de traitement (11).

12. Appareil de lecture selon l'une des revendications 1 à 11, **caractérisé en ce que** le dispositif de prise d'images (2) comprend une interface pour la connexion d'un dispositif de traitement (11) pour le traitement du texte et/ou de l'image détectée au moyen du dispositif de prise d'images (2) et/ou d'un dispositif d'affichage (9) pour l'affichage du texte et/ou de l'image traitée au moyen du dispositif de traitement (11) et/ou d'un dispositif de sortie vocale pour la sortie audio du texte et/ou de l'image traitée au moyen du dispositif de traitement (11) et/ou d'un afficheur Braille pour l'affichage en écriture Braille du texte et/ou de l'image traitée au moyen du dispositif de traitement (11).

13. Appareil de lecture selon l'une des revendications 1 à 12, **caractérisé en ce que** le dispositif de prise d'images (2) correspond à l'élément d'appui (4), à l'élément de base (5) ou au dispositif de traitement (11) ou est couplé avec l'élément d'appui (4), l'élément de base (5) ou le dispositif de traitement (11).

14. Appareil de lecture selon l'une des revendications 1 à 13, **caractérisé en ce que** l'appareil de lecture comprend un élément de protection, de préférence un clapet, afin d'empêcher ou de réduire la pénétration d'une lumière extérieure.

15. Appareil de lecture selon la revendication 14, **caractérisé en ce que** l'au moins un élément de protection correspond à l'élément de base (5) ou à l'élément d'appui (4), de préférence l'au moins un élément de protection étant logé de manière pivotante au niveau de l'élément de base (5) ou de l'élément d'appui (4).
